# EUROPEAN PATENT SPECIFICATION

(11) **EP 4 201 366 B1**
(45) Date of publication and mention of the grant of the patent: **17.12.2025**
(21) Application number: 21383210.8
(22) Date of filing: 23.12.2021
(51) Int. Cl.: A61C 5/40, A61C 5/50, A61C 17/02, A61C 1/14

(54) **MULTIFUNCTION IRRIGATION ENDODONTIC DEVICE**
MULTIFUNKTIONALE ENDODONTISCHE SPÜLVORRICHTUNG
DISPOSITIF ENDODONTIQUE D'IRRIGATION MULTIFONCTION

(43) Date of publication of application: 28.06.2023
(73) Proprietor: Elzaurdia López, Carlos, 28006 Madrid (ES); Loroño Goicoechea, Gaizka, 48008 Bilbao - Bizkaia (ES); Conde Villar, Antonio Jesús, 28016 Madrid (ES); Martín Escorial, Alfonso, 03540 Alicante (ES); Dorado Nuño, Saúl Manuel, 28038 Madrid (ES)
(72) Inventor: Elzaurdia López, Carlos, 28006 Madrid (ES); Loroño Goicoechea, Gaizka, 48008 Bilbao - Bizkaia (ES); Conde Villar, Antonio Jesús, 28016 Madrid (ES); Martín Escorial, Alfonso, 03540 Alicante (ES); Dorado Nuño, Saúl Manuel, 28038 Madrid (ES)
(74) Representative: ABG Intellectual Property Law, S.L.

(56) References cited:
- WO-A1-2011/060327
- CN-U- 209 827 059
- US-A1- 2010 262 175
- US-A1- 2015 125 812
- US-A1- 2020 268 491
- US-A1- 2021 330 425

## Description

### OBJECT OF THE INVENTION

The present invention is in the area of endodontics, which belongs to a branch of odontology.

The present invention defines a positive pressure irrigation endodontic device which allows the success rate of endodontic treatment to be increased.

### BACKGROUND OF THE INVENTION

Endodontic treatment is indicated when caries, caused by microorganisms (mainly bacteria and fungi), reaches the pulp tissue, known as the nerve. Bacteria are capable of colonizing the entire the system of canals, where said canals are the irregular space occupied by pulp tissue. As a consequence, this pulp tissue undergoes an inflammation and infection process that extends to the tissues adjacent to the tooth, mainly to the bone, and can generate signs and symptoms such as fever, abscesses, intense pain, and bone loss. Therefore, the objective of endodontic treatment consists of removing diseased pulp tissue and microorganisms from inside the tooth, i.e., from of the system of canals. Precisely the main cause of failure of endodontic treatment is the difficulty in removing all the microorganisms present in the region to be treated, that is, the diseased pulp tissue.

Current endodontic procedures have drawbacks yet to be resolved by the existing state of the art, the main drawback being the impossibility of cleaning the affected region in a thorough, efficient, rapid and safe manner for the patient.

Currently, there are several alternatives regarded as standard treatments for cleaning and disinfecting the system of canals. They all use antimicrobial solutions the purpose of which consists of cleaning the system of canals to prepare for the subsequent filling thereof.

Positive pressure irrigation is the most widespread standard treatment worldwide. By means of this system, the odontologist manually presses a syringe containing an irrigant fluid, said irrigant a being disinfectant fluid (usually sodium hypochlorite), exiting through a needle. Control over the speed at which the region to be treated is irrigated is limited, for which reason half of all odontologists have caused at least one sodium hypochlorite accident, according to the American Association of Endodontists.

Furthermore, it has been demonstrated that the flow distributions achieved with this irrigation are inefficient in terms of cleaning of the system of canals, mainly due to the inability to penetrate all the anatomical irregularities, such as ramifications, isthmuses and lateral canals. At the same time, irrigation of this type generates low wall shear stress values, which hinders the elimination of microorganisms which organize themselves in the form of biofilms and are stuck to the walls of the system of canals.

Sonic and ultrasonic activation systems, which depend on power (sonic systems usually have a frequency comprised in the 160-6000 Hz range, and ultrasonic systems usually have a frequency comprised in the 25000-45000 Hz range), are used today as a complement to this type of irrigation. These systems are more effective both in terms of penetration of the irrigant in the entire system of canals and in terms of wall shear stress. Nevertheless, both types of activation depend on a dispensing system and the inability to refresh the irrigant is one of its main drawbacks, since the ability of sodium hypochlorite to eliminate microorganisms drops rapidly. This means that activation times of only 60-120 seconds in the entire treatment are used today.

Document WO2011136798 describes a multipurpose endodontic device for combining irrigation with an irrigant activation treatment in the tooth canals. This device has a hollow tip coupled to a device for the ultrasonic vibration of the cannula with conduits which allow irrigation through the same cannula. The device also comprises a coupling system by means of which said system is inserted into a larger device to make it easier to handle.

Despite the advantages of incorporating two different types of treatment, the device of WO2011136798 does not achieve a multidirectional cleaning that is completely safe at the same time, since it would require changing the cannula halfway through the intervention to do so. Furthermore, the design involves low visibility of the tooth and uncomfortable handling of the device since the irrigation system comprises a tube outside the device which may even require manual action of the operator. Lastly, the proposed activation system only comprises activation by a linear movement, which performs a heterogeneous distribution of the cleaning generated by the methodology.

Document ES2485065A1 describes another multipurpose endodontic device. In this case, the device combines negative pressure irrigation with ultrasonic activation methods. Coronal irrigation is achieved by means of a rubber cannula so that in the most apical section of the apparatus, the ultrasonic activation and the aspiration of the irrigant is performed by means of ports at the distal end of the cannula. In addition to the advantages of the device set forth above, this device incorporates the removal of the irrigant from the tooth canals, even though it involves certain aspects which may represent clinical problems. First, the combination of ultrasonic activation with negative aspiration may give rise to cavitation phenomena inside the irrigation cannula which seriously compromise the service life thereof, where it may be trapped inside the tooth canals as the removal is very difficult to carry out. In addition to this problem, since the cannula is attached by glue or chemical bonding to the body of the device, every time a cannula breaks, which occurs quite often in clinical practice, the entire system must be replaced. Furthermore, the irrigation system is not very efficient because when coronal irrigation is performed, irrigant flows at the apical level, which allow cleaning of the apexes or of the possible isthmuses or lateral canals present in the tooth to be treated, will not be generated. Lastly, the presence of the irrigation-aspiration system means that there will be at least one device and two auxiliary tubes in the patient's mouth, which complicates the intervention and is uncomfortable for the patient.

Document US2015/125812A1 discloses a positive pressure irrigation endodontic device according to the preamble of claim 1.

### DESCRIPTION OF THE INVENTION

The present invention proposes a solution to the above problems by means of an endodontic device according to claim 1 and by means of a system according to claim 15. The dependent claims define preferred embodiments of the invention.

A first inventive aspect defines a positive pressure irrigation endodontic device comprising:
- a body comprising a compartment configured for detachably housing a container, wherein the container contains an irrigant,
- irrigation means housed in the body and configured for establishing fluid communication with the container when the container is housed in the compartment, wherein the irrigation means are configured for conducting the irrigant from the container to the outside of the device,
- a coupling system configured for coupling an irrigation cannula to the device, establishing fluid communication between the irrigation cannula and the irrigation means,

wherein the coupling system comprises:
   - a driven shaft extending along a main direction (x),
   - a main part coaxial with the driven shaft according to the main direction (x) and coupled to said driven shaft,
wherein the main part is configured for housing and fixing the irrigation cannula, the device further comprising:
   - a rotation mechanism comprising a driving shaft and first actuation means configured for completely rotating the driving shaft around its longitudinal direction (y), and
   - attachment means between the driving shaft and the driven shaft configured for connecting the driving shaft and the driven shaft such that the rotation of the driving shaft is transmitted to the driven shaft, driving the irrigation cannula to rotate when said irrigation cannula is coupled to the coupling system,
the device being characterized in that it comprises:
   - an angular variation mechanism configured for modifying the angle formed between the main direction (x) of the coupling system and the driving shaft, wherein the angular variation mechanism is implemented according to one of the following options:
      (i) the angular variation mechanism comprises a movable tab connected directly or by means of at least one intermediate element to the coupling system, such that the movement of the tab is transformed into a pushing or pulling action on the coupling system so that by means of the pushing or pulling action exerted, the mechanism causes an angular movement of the coupling system with respect to the driving shaft;
      (ii) the angular variation mechanism comprises a motor connected directly or by means of the intermediation of one or more additional elements to the coupling system and wherein the motor is configured for moving the coupling system.

The device of the invention allows disinfecting or coadjuvant substances to be injected into the tooth canals and the irrigation cannula to be completely rotated, that is, rotated 360° around the main direction (x), through the coupling system of said device for irrigating the region to be treated of the patient in multiple directions. Advantageously, the device of the invention allows dispensing and refreshing a disinfecting agent (known as an irrigant), while at the same time being capable of distributing it to facilitate the penetration thereof in the anatomical irregularities of the system of canals. Therefore, by means of the complete rotation of an irrigation cannula with a lateral outlet, the irrigant is allowed to flow out in all directions and to reach the entire system of canals, and the irrigant remains in contact with the pathogenic agents for the longest time possible, generating a disinfection superior to other devices present on the market. The irrigant contained in the container can be any type of irrigant used in endodontic treatments, such as sodium hypochlorite, EDTA (ethylenediaminetetraacetic acid), etidronic acid, citric acid, chlorhexidine, etc.

The present device comprises a driving shaft, present in the rotation mechanism, and a driven shaft present in the coupling system, which are coupled to one another through the attachment means, which allows the transmission of movement between them.

Additionally, the main part is coupled to the driven shaft, therefore behaving as an integral part of said driven shaft once coupling is performed. In one embodiment, the main part is detachably coupled to the driven shaft. In one embodiment, the main part and the driven shaft are configured as a single part.

The attachment means thereby allow the transmission of movement between the driving shaft and the driven shaft, whereas the coupling between the driven shaft and the main part allows the transmission of movement between the driven shaft and said main part.

In one embodiment, the attachment means between the driving shaft and the driven shaft are implemented as a tooth gear, and comprise a toothed wheel at one end of the driving shaft (driving wheel) and a toothed wheel at the end of the driven shaft (driven wheel). The driving wheel and the driven wheel can form a single part with the driving shaft and the driven shaft, respectively, or they can be independent parts coupled to said shafts. In one embodiment, the attachment means are a pinion-crown system.

The rotation mechanism is configured for causing a rotational movement of the irrigation cannula around its longitudinal direction of 360°, therefore allowing the irrigant to flow out in all directions through the lateral outlet of the irrigation cannula. That is, the rotation mechanism allows, through the first actuation means, the driving shaft to rotate around its main axis (y) completely and in the desired number of revolutions. This rotational movement is transmitted, through said driving shaft, to the driven shaft, in particular by the attachment means, the driven shaft therefore rotating around its main direction (x), also completely, that is, 360°. In turn, the rotational movement of the driven shaft is transmitted to the irrigation cannula through the main part, when said irrigation cannula is coupled to the coupling system and, therefore, to the main part.

In one embodiment, the first actuation means comprise a motor, which allows the automatic actuation and the continuous and non-stop movement of the rotation mechanism. In one embodiment, the motor is a rotary motor, which can be continuous or reciprocating. In one embodiment, the driving shaft is the shaft of the rotary motor; in another embodiment, the driving shaft is a separate part of the rotary motor, coupled to same.

The container (or carpule), which will be housed in the compartment during use of the device, is interchangeable. In a use situation of the device, with the container housed in the compartment of the body of the device, the container is coupled to the irrigation means so as to allow conducting irrigant from the container to the outside of the device through the irrigation cannula. In one embodiment, the container is coupled to the irrigation means by means of a port which prevents irrigant from leaking towards the compartment. In one embodiment, the irrigation means comprise one or more conduits fluidically connected to one another which run from the compartment to be fluidically connected to the container, up to a position which allows fluidic connection with the inside of the irrigation cannula, thereby allowing the irrigant to be conducted out of the device.

In one embodiment, the device comprises an agitation mechanism configured for causing an agitation movement on the irrigation cannula. In one embodiment, the agitation mechanism comprises second actuation means configured for generating a movement. Depending on the configuration of the agitation mechanism, the movement generated by the second actuation means can be the agitation movement itself, or it can be a different movement which is transformed into the agitation movement required on the irrigation cannula.

The agitation mechanism causes an agitation movement on the irrigation cannula when said cannula is coupled to the coupling system. Said agitation movement can be applied on the coupling system, which transmits the movement to the irrigation cannula when it is coupled to the coupling system, or it can be applied directly on the irrigation cannula when it is coupled to the coupling system. In one embodiment, the agitation movement is a pitching movement. The agitation mechanism allows the projection of the irrigant in a larger area of the region to be treated, the irrigant flow therefore reaching stagnation regions or points of the region to be treated. The attachment means between the driving shaft and the driven shaft allow the described movements, preferably the pitching movement, of the coupling system, and therefore of the irrigation cannula, without affecting the complete rotation caused on said irrigation cannula by the rotation mechanism or the efficiency of the coupling with the driving shaft, and therefore with the transmission of movement produced between the driving and driven shafts through said attachment means.

Advantageously, by means of the agitation mechanism the irrigation cannula itself, which rotates around its longitudinal direction so as to allow the irrigant to flow out in all directions, is also capable of agitating the irrigant flow by means of the movement exerted on the irrigation cannula through the agitation mechanism. This agitation is known as activation, which could be sonic or ultrasonic, depending on treatment needs. Furthermore, the irrigant can be activated sonically or ultrasonically throughout the entire procedure for cleaning the region to be treated, based on the established requirements and without a time limit.

In one embodiment, the second actuation means generate an agitation which produces sonic or ultrasonic sonic activation, depending on treatment needs. In one embodiment, the agitation frequency is comprised between 1 Hz and 100,000 Hz, preferably between 1 and 60,000 Hz. Preferably, in the case of sonic activation, the agitation frequency is comprised between 100 and 7000 Hz. Preferably, in the case of ultrasonic activation, the agitation frequency is comprised between 20,000 and 60,000 Hz.

The agitation mechanism can be implemented in different ways, some of which are described below.

In one embodiment, the agitation mechanism comprises second actuation means, wherein said second actuation means comprise a vibration motor configured for generating a vibration and for transmitting said vibration to the irrigation cannula by means of the connection between the vibration motor and the irrigation cannula. The connection between the vibration motor and the irrigation cannula can be direct or through at least one intermediate element. In the case of a direct connection, the vibration motor is configured for being connected with the irrigation cannula when the cannula is coupled to the coupling system. In the case of a connection with the intermediation of one or more additional elements, the agitation mechanism comprises at least one element connected to the vibration motor and configured for being connected with the irrigation cannula when the cannula is coupled to the coupling system. The vibration motor, which is preferable a high or low frequency vibration motor, causes the movement of the elements connected to same (whether the irrigation cannula directly or one or more intermediate parts), which vibrate at the frequency of the vibration motor due to the contact between parts.

In one embodiment, the agitation mechanism comprises second actuation means and a transmission mechanism, wherein the transmission mechanism is coupled to the second actuation means and is connected to the coupling system for transforming the movement of the second actuation means into an agitation movement of the coupling system. In one embodiment, the second actuation means comprise a rotary or reciprocating motor, continuous or reciprocating. In one embodiment, the agitation movement is a reciprocating movement. In one embodiment, the transmission mechanism comprises at least one lever and/or at least one toothed wheel.

In one embodiment, the agitation mechanism comprises second actuation means and a movable element coupled to the second actuation means, and the main part of the coupling system comprises a connection element, the movable element being configured for being displaced by said connection element when it is moved due to the effect of the second actuation means, causing a driving movement of the main part. In one embodiment, the second actuation means comprise a rotary or reciprocating motor, continuous or reciprocating. In one embodiment, the connection element is a rail or slot.

In one embodiment, the movable element is a cranked arm with a first end coupled to the second actuation means and a second end configured for being housed in the connection element. Therefore, the second end of the cranked arm interacts with said connection element of the main part, being housed in same and with the capacity to move along same, preferably by sliding. Therefore, the second end of the cranked arm runs along the path defined by the connection element, made as a rail or as a slot in a preferred embodiment. The coupling between the second end of the cranked arm and the connection element of the main part produces the driving of the main part when the cranked arm rotates, and thereby produces the movement which causes the agitation of the irrigation cannula. In one embodiment, the second end is substantially spherical.

In one embodiment, the device comprises frequency control means, configured for acting on the agitation mechanism, preferably on the second actuation means, controlling and regulating the agitation frequency. Said frequency control means are configured for selecting the suitable frequency, preferably corresponding to either sonic agitation or else to ultrasonic agitation.

In one embodiment, the device comprises processing means configured for commanding the frequency control means.

According to the invention, the device comprises an angular variation mechanism configured for modifying the angle formed between the main direction (x) of the coupling system and the driving shaft.

The angular variation mechanism allows the angle formed between the main direction of the coupling system (i.e., the main direction of the driven shaft) and the driving shaft to be modified, and, therefore, the angle of the irrigation cannula (coupled to the device in a use situation) with respect to said driving shaft to be modified. The variation of the angle of the irrigation cannula means that said irrigation cannula is located in positions from zero to ninety degrees on either side of said driving shaft, and therefore a total of 180° from the defined position of the driving shaft, to allow performing interventions on all the teeth, of the upper or lower arcade, comfortably. Advantageously, said angular variation allows the orientation of the irrigation cannula to achieve the irrigation of any point required of the region to be treated. In one embodiment, the angular variation mechanism allows an angular movement of between 0 and 180°, said pitching movement being with respect to the driving shaft.

In a particular embodiment, the attachment means of the device, located between the driving shaft and the driven shaft, are configured for simultaneously allowing the variation of the angle formed between the main direction (x) of the coupling system and the driving shaft as well as the rotation of the irrigation cannula around the main direction (x) through the rotation mechanism.

Advantageously, this allows the combination of several movements, all of which are exerted, direct or indirectly, on the irrigation cannula. In particular, the irrigation cannula is made to rotate completely around its main direction, preferably by performing a plurality of revolutions in a continuous manner, furthermore, optionally receiving an agitation movement which involves performing a pitching movement, whereas it additionally allows the angling thereof so as to be positioned with respect to the driving shaft, in order to obtain better reach in the region to be treated.

In one embodiment, the coupling system, the driving shaft, the angular variation mechanism, the rotation mechanism, and the attachment means between the driving shaft and the driven shaft are housed in the body of the device.

In one embodiment, the attachment means are implemented as a universal joint, a Kaplan joint, or rotation transmission means. Advantageously, attachments of this type allow the angular variation as well as the rotation of the irrigation cannula about its longitudinal direction simultaneously, both when the driving and driven shafts are coaxial and when they are not. Therefore, in the embodiments in which the device is configured for performing two or more movements of those described above, any type of attachment which allows said movements on the irrigation cannula to be performed simultaneously will be considered a valid attachment means between the driving and driven shafts.

In one embodiment, the coupling system comprises a nozzle arranged on an outlet port located at a distal end of the body of the device, providing the coupling system with structural continuity with the outer surface of the body of the device, projecting from said distal end. In one embodiment, the nozzle at least partially houses therein other elements of the coupling system. The nozzle comprises an outlet port where the irrigation cannula is inserted, allowing the rotation of the irrigation cannula about its main direction.

In one embodiment, the connection of the nozzle with the body of the device is performed by means of a riveted attachment, by means of a screwed attachment, or by means of a threaded attachment through respective complementary geometries arranged on a surface of the nozzle and on a surface of the body of the device adjacent to the distal end thereof.

According to a first option of the present invention, the angular variation mechanism comprises a movable tab connected to the coupling system, such that the movement of the movable tab becomes a pushing and/or pulling action on the coupling system. Therefore, by means of the pushing or pulling action exerted, the mechanism causes an angular movement of the coupling system with respect to the driving shaft.

In one embodiment in which the coupling system comprises a nozzle, said pushing and/or pulling action can be performed on the nozzle (or on a portion of same), for causing an angular movement of the nozzle (or of a portion of same), which in turn causes an angular movement of the rest of the coupling system. In another embodiment, said pushing and/or pulling action is performed on another element of the coupling system for causing an angular movement of the coupling system. Preferably, the device comprises a slot through which the movable tab is accessible from outside the device for manual actuation by the operator.

The connection of the movable tab with the coupling system can be direct or by means of at least one intermediate element, such as one or more toothed wheels meshing with one another and/or levers. In one embodiment, the angular variation mechanism comprises a movable tab and a lever connected to the movable tab.

In one embodiment in which the coupling system comprises a nozzle, said nozzle comprises a position guide which allows the angle of orientation of the outlet port, and therefore, the angle of the irrigation cannula with respect to the driving shaft to be changed. In particular, the position guide of the nozzle changes in position as a consequence of the action of the movable tab, the movement of which is performed along a slot defined on the surface of the body of the device. In one embodiment, in the most proximal position of the movable tab, the angle of the irrigation cannula with respect to the driving shaft is zero degrees, whereas in its most distal position, the angle of the irrigation cannula with respect to the driving shaft is ninety degrees. In one embodiment, the action of the movable tab allows the position of the nozzle, and therefore of the irrigation cannula, to be varied by means of a lever coupled to the nozzle which, through the position guide, rotates said nozzle when the movable tab is moved. In a use situation with an irrigation cannula coupled to the device, the change in position of the nozzle causes a variation of the angle of the irrigation cannula with respect to the driving shaft and an angular movement of said coupling system with respect to the driving shaft. In one embodiment, the movable tab is located on one side of the body of the device.

In one embodiment in which the connection of the nozzle with the body of the device is performed by means of a riveted attachment, by means of a screwed attachment, or by means of a threaded attachment or the like, it will be understood that said attachment will provide to the nozzle (or to a portion of same) one degree of freedom of angular (pitching and/or yawing) movement sufficient so as to be actuated such that the angular position of the outlet port and, therefore, the angle of the irrigation cannula, is varied within the desired range.

In this sense, embodiments may include the implementation of movable or articulated portions of the nozzle itself; an allowance which allows the relative displacement between the nozzle and the body of the device around the screwed/riveted points, or allowing the rotation on the threading; and/or the mechanical articulation of at least one portion of the distal end of the body of the device to which the nozzle is coupled.

Although the action of the movable tab on the nozzle for causing a rotation of the nozzle has been described, in another embodiment (wherein the coupling system may or may not comprise a nozzle), the movement of the movable tab acts on another element of the coupling system by means of the action of a lever coupled to said element of the coupling system, causing an angular movement both of the coupling system and of the irrigation cannula coupled to same, with respect to the driving shaft.

In one embodiment, the movable tab is connected with the main part of the coupling system. The connection can be direct or by means of the intermediation of one or more additional elements, such as a lever.

According to a second option of the present invention, the angular variation mechanism comprises third actuation means, these means being a motor configured for moving the coupling system. This allows an electronic positioning of the desired angle of inclination. The connection between the motor and the coupling system can be direct or by means of the intermediation of one or more additional elements. In one embodiment, the motor is a rotary or reciprocating motor.

In one embodiment in which the coupling system comprises a nozzle, said nozzle is configured with a substantially spherical shape. Advantageously, this nozzle allows a multidirectional orientation in any plane of the irrigation cannula when the irrigation cannula is coupled to the device.

In one embodiment, the device comprises displacement means located either between the main part and the irrigation cannula, or else between the main part and the driven shaft, configured for allowing a longitudinal movement of the irrigation cannula, in the main direction of said irrigation cannula. Advantageously, a longitudinal movement on the irrigation cannula allows said cannula to be moved closer to or away from the treatment region on which the irrigant is projected, said longitudinal movement being an additional movement with respect to the previously mentioned movements on the cannula.

In one embodiment, the coupling system comprises:
- a guide part, and
- an actuation part,
wherein the guide part and the actuation part are coaxial with one another, and also with the main part according to the main direction (x), and wherein the guide part is configured for housing and fixing the actuation part and for being coupled with the main part.

That is, the guide part and the actuation part can be coupled to one another, and they can be coupled with the main part. Advantageously, this allows the transmission of movement from the main part to the irrigation cannula through the guide part and the actuation part, whereas the irrigation cannula is further fixed in position not only by means of the main part but also by means of the guide part, supported in turn by the main part.

In one embodiment, the main part of the coupling system comprises an opening configured for receiving an irrigation cannula, and a plurality of movable second tabs, arranged surrounding the opening, and the actuation part comprises fitting lips configured for being coupled with the tabs and for pressing said tabs in a gripping direction for securing an irrigation cannula housed in the opening.

In one embodiment:
the actuation part comprises a plurality of teeth arranged on an outer surface,
the guide part comprises a cavity configured for housing the actuation part and guides configured for meshing with the teeth of the actuation part,
the main part comprises a recess configured for housing an end of the actuation part, wherein the recess comprises a toothed wheel,
the coupling system comprises a spring arranged between the actuation part and the main part, configured for exerting resistance against the displacement of the actuation part towards the main part,
wherein the displacement of the actuation part towards the recess of the main part causes a rotation of the actuation part by means of the toothed wheel of the main part, which causes:
   - the actuation part and the guide part to be fixed by means of the teeth of the actuation part, or
   - the actuation part to be released from the guide part by means of the teeth of the actuation part.

In one embodiment, the compartment of the body comprises a spring connected to a piston, wherein the spring is configured for pushing the piston towards an inner wall of the compartment. Therefore, when there is a container housed in the compartment, the spring and piston assembly presses the container against said inner wall of the compartment. As a result of the action of the piston and spring mechanism located at one end of the compartment, the container is introduced and fitted in the suitable position inside the compartment.

In one embodiment, the device comprises a securing part, wherein the securing part is detachable to allow the container to be removed from inside the compartment and can be fixed to the body of the device to prevent the container from being displaced from its position once it is housed in the compartment. In one embodiment, the securing part is fixed to the body by means of one or more tabs.

In one embodiment, the insertion of the container in the compartment is performed by means of an opening arranged in an upper portion of the body. In another embodiment, the container is inserted in the device through an opening arranged in the rear portion of the body.

In one embodiment, the body has a window for checking the irrigant fill status in the container.

In one embodiment, the device comprises a temperature sensor configured for measuring the temperature of the irrigant contained in the container, when the container is housed in the compartment.

In one embodiment, the device comprises heating means configured for heating the irrigant contained in the container when it is housed in the compartment. Advantageously, heating the irrigant at a suitable temperature, preferably between 50°C and 80°C, more preferably 60°C and 70°C, enhances the capacity to eliminate microorganisms and improves canal cleaning efficiency. Additionally, in one embodiment the device comprises temperature control means for controlling the temperature of the irrigant inside the container. Controlling the temperature of the irrigant allows using an irrigant at lower concentrations at a higher temperature, which is safer and more efficient than using an irrigant at higher concentrations.

In one embodiment, the heating means comprise a resistor arranged inside the compartment.

In one embodiment, the device comprises processing means configured for commanding the temperature control means.

In one embodiment, the resistor for heating the irrigant is variable so as to allow the temperature of the irrigant to be regulated. In one embodiment, the device comprises a dial or button for regulating the heating temperature. This dial or button can be located in the body of the device.

In one embodiment, the device comprises a screen for displaying information, for example for displaying the temperature of the irrigant.

In one embodiment, the irrigation means comprise a pump for regulating the irrigant flow speed. The dispensing of the irrigant at a speed that can be regulated allows the irrigant flow rate desired for the treatment to be selected and gives rise to a safer disinfection, since the risk of extravasation of the irrigant outside of the tooth, i.e., into the bone, is prevented or at least minimized. The extravasation of irrigant has very negative consequences for the patient. The device of the invention allows the irrigant to be dispensed in a safer manner because the irrigation speed on the region to be treated can be regulated and controlled by means of a mechanical operation.

In one embodiment, the irrigation means comprise flow rate control means which allow acting on the pump for regulating the irrigant flow speed.

In one embodiment, the flow rate control means regulate the irrigant flow rate so that it is comprised between 3 mL/min and 30 mL/min during treatment. Advantageously, the device allows lower flow rates (such as between 3 mL/min and 6 mL/min), which allow for safe irrigation, to be established without the risk of extravasation of the irrigant, putting the patient at risk. In contrast, the flow rate in conventional systems depends on the force exerted by the operator, which is not able to suitably regulate it, so it is variable and therefore dangerous.

In one embodiment, the device comprises processing means configured for commanding the flow rate control means.

In one embodiment, the device comprises a plurality of control means for controlling a plurality of mechanisms and/or of operation variables of the device, such as temperature control means, frequency control means, and/or flow rate control means. In one embodiment, the device comprises processing means configured for commanding said control means.

In one embodiment, the processing means are one or more microcontrollers.

In one embodiment, the irrigation means comprise a check valve to prevent the irrigant from returning to the container.

In one embodiment, the irrigation means comprise at least one conduit connecting the pump to the coupling system for conducting the irrigant to the irrigation cannula coupled to the coupling system.

In one embodiment, the device comprises a handle to facilitate the gripping of the device by the operator. In one embodiment, the handle has an ergonomic configuration for a more comfortable handling. In one embodiment, the handle has a coating or a finish which facilitates the gripping and reduces the risk of slippage. In one embodiment, the handle comprises a housing for a battery and a battery exchange and/or recharging terminal. In one embodiment, the handle comprises actuation elements for the different mechanisms.

In one embodiment, the body and the handle are integrated in a single part.

In one embodiment, the compartment for the container allows two or more containers to be housed, and the device comprises container selection means, configured for selecting which of the containers is used for the irrigation. This embodiment is particularly advantageous if containers with two different irrigants are used, such that the selection of the container allows changing the irrigant used. In one embodiment, a container is divided into compartments in order to contain two or more irrigants in separate compartments, and the device comprises compartment selection means. In embodiments in which the device is configured for housing more than two containers or a container divided into compartments, the device is configured for fluidically connecting each of the containers and/or compartments to the irrigation means. Preferably, the container and/or compartment selection means comprise at least one valve. Particularly, the selection means can be a single valve, which allows the opening/closing of the different containers or of the different compartments of a single container divided into compartments, or the selection means can be a plurality of valves, each of said valves being connected with a container or compartment of a container divided into compartments. In any of these cases, the selection means in the form of one or more valves allow the regulation of irrigant flow between the container(s) or compartment(s) and the outside, as well as the selection of the outlet of the flow based on the container or compartment selected.

A second inventive aspect defines an irrigation system comprising a device according to any of the embodiments of the first inventive aspect, and an irrigation cannula coupled to the coupling system, wherein the irrigation cannula comprises an irrigant outlet port arranged on one side. Advantageously, a cannula with only a lateral outlet prevents the extravasation of the irrigant towards the bone.

In one embodiment in which the main part of the coupling system comprises an opening configured for receiving the irrigation cannula and a plurality of movable second tabs arranged surrounding the opening, and wherein the device comprises an actuation part with fitting lips configured for being coupled with the tabs and for pressing said tabs, the irrigation cannula is fixed in a predetermined position by means of the tabs of the main part of the coupling system. The irrigation cannula is thereby inserted in the coupling system, being fixed with respect to the main part of said coupling system to prevent the relative movement thereof during irrigation of the region to be treated. In particular, the irrigation cannula is placed in its predetermined position by means of the insertion thereof in the main part for subsequently pressing the actuation part, until the fitting lips of the actuation part contact the tabs of the main part, thereby causing the gripping and securing of the irrigation cannula by means of the tabs, preventing the displacement thereof due to forces generated by the irrigation. Furthermore, the tabs allow the coupling of various types of straight or tapered cannulas, based on the requirements of the region to be treated.

In one embodiment, the irrigation cannula is made of a polymer material capable of withstanding the loads resulting from the action of the device at sonic and ultrasonic frequencies.

In one embodiment, the irrigation cannula is made of a metallic material capable of withstanding the loads resulting from the action of the device at sonic and ultrasonic frequencies.

In one embodiment, the irrigation cannula has a tapering percentage of between 0% and 8%, preferably between 6% and 8%, said tapering percentage being on at least part of the length of the irrigation cannula, or on the entire length of said irrigation cannula.

A third aspect, which is not part of the present invention, defines a method for the irrigation and cleaning of tooth canals, comprising the following steps:
- providing a device according to any of the embodiments of the first inventive aspect,
- providing an irrigant container and installing it in the compartment of the body of the device,
- providing a hollow irrigation cannula with a lateral outlet, and coupling it to the coupling system of the device,
- dispensing the irrigant from the container into said tooth canals.

In one embodiment, the method comprises rotating the irrigation cannula around while dispensing irrigant inside the tooth canals and/or sonically or ultrasonically agitating the irrigation cannula while dispensing irrigant inside the tooth canals.

In one embodiment, the method comprises heating the irrigant to a desired temperature and dispensing the irrigant at said temperature.

### DESCRIPTION OF THE FIGURES

These and other features and advantages of the invention will become apparent based on the following detailed description of a preferred embodiment, given solely by way of illustrative and non-limiting example in reference to the attached figures.
Figures 1A - 1E show, respectively, side, rear, zenith, opposite side, and isometric views of the device according to one embodiment of the invention.
Figure 1F shows a longitudinal section of the compartment of the container of the device according to one embodiment of the invention.
Figure 2A shows a diagram of the coupling system according to one embodiment of the invention.
Figures 2B and 2C show, respectively, side and isometric views of the coupling system according to one embodiment of the invention.
Figures 3A - 3E show, respectively, isometric, exploded isometric, side, exploded side, and section views of the coupling system according to one embodiment of the invention.
Figure 3F shows a side view of the coupling system of Figures 3A - 3E when the coupling system has an angular variation with respect to the position shown in Figures 3A - 3E.
Figures 4A - 4C show, respectively, side, front, and section views of the actuation part according to one embodiment of the invention.
Figures 5A - 5B show, respectively, side and section views of the guide part of the coupling system according to one embodiment of the invention.
Figures 6A - 6C show, respectively, side, section, and front views of the main part of the coupling system according to one embodiment of the invention.
Figure 7 shows a diagram of conduits and instruments of the irrigation means according to one embodiment of the invention.
Figure 8 shows an electrical wiring diagram of the rotation, pumping, heating, and agitation systems according to one embodiment of the invention.
Figure 9 shows a block diagram of the temperature display and measuring system according to one embodiment of the invention.
Figures 10A - 10B show, respectively, side and isometric views of the device according to one embodiment of the invention.
Figures 11A - 11B show, respectively, side and isometric views of the device according to another embodiment of the invention.

### DETAILED DESCRIPTION OF THE INVENTION

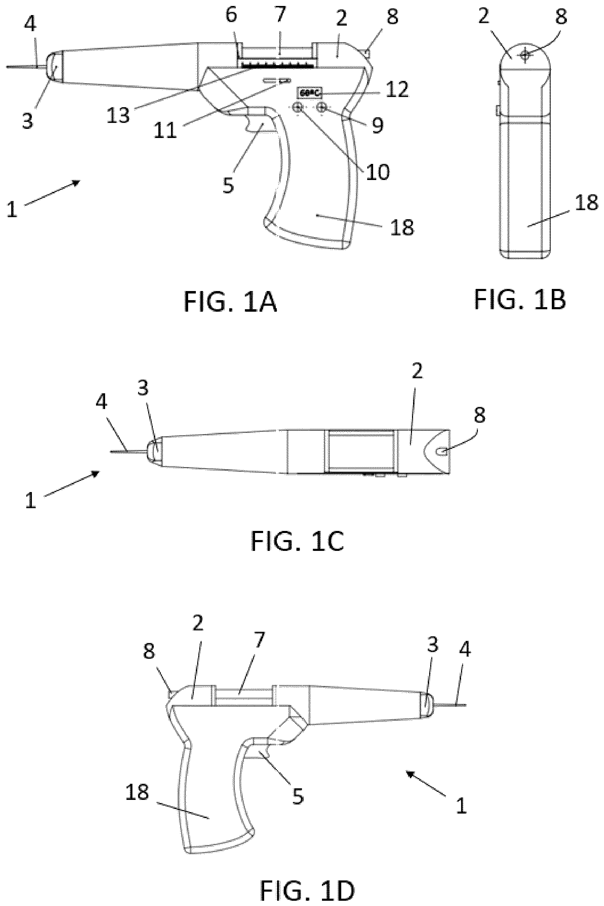

Figures 1A - 1E show, respectively, side, rear, zenith, opposite side, and isometric views of the device according to one embodiment of the invention.

Figure 1A shows a side view of the device, in which there can be seen an ergonomic handle (18), which allows the operator to easily handle the device, a body (2), and a nozzle (3), which is part of a coupling system (16) configured for coupling the irrigation cannula (4) to the device (1) and configures the outlet from inside the device towards the outside, through the irrigation cannula (4). In the embodiment shown, the device (1) has coupled thereto an irrigation cannula (4) and a container (7) housed in a compartment (14) located in the upper portion of the body (2).

Several elements and devices are contained inside the body (2); in particular, the other elements of the coupling system (16) configured for coupling the irrigation cannula (4) to the device (1), a rotation mechanism including a driving shaft (921), and attachment means between the driving shaft (921) and the coupling system (16).

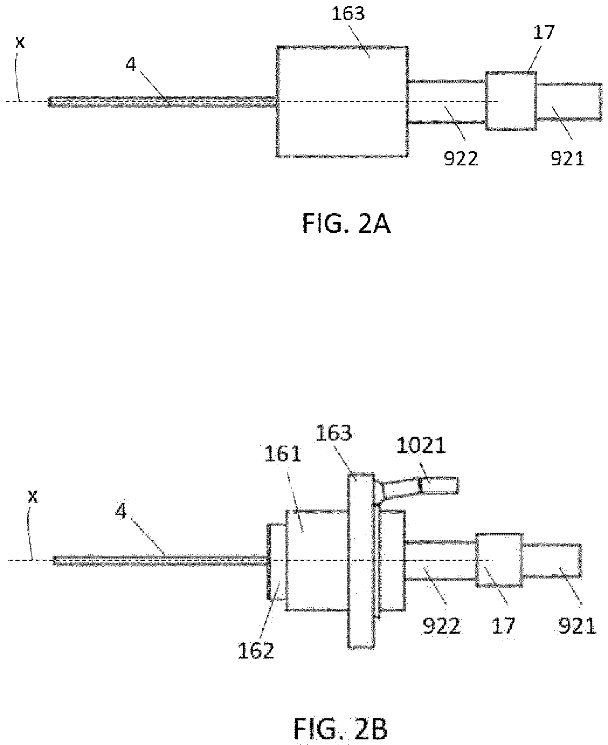

As shown in Figure 2A, the coupling system (16) comprises a driven shaft (922) extending along a main direction (x) and a main part (163) coaxial with the driven shaft (922) and coupled to said driven shaft (922). The driven shaft (922) is connected to the driving shaft (921) through the attachment means (17). Additionally, the driven shaft (922) is coupled with the main part (163), which in turn houses and fixes the irrigation cannula (4). In particular embodiments of the invention, the attachment means between the driven shaft (922) and the driving shaft (921) are, for example, threaded ends in both shafts which allow a threaded attachment, or a press-fit attachment, or by means of additional attachment elements such as a pin, tabs with respective housings, lugs, or threaded bolts.

In one embodiment, the driven shaft is integrated forming a single part with the main part. In other embodiments, the driven shaft and the main part are two separate parts configured for being coupled to one another. In particular embodiments of the invention, the coupling between the main part and the driven shaft is performed through attachment means such as adhesive, welding, or by means of pressure or fitting of parts such as tabs or lugs.

Other elements of the device which are not visible in Figures 1A - 1F are described below in connection with Figures 2B - 9.

In the embodiment of Figures 1A-1F, the device further comprises an agitation mechanism in addition to an angular variation mechanism of the invention.

Figures 1A-1E show an on/off button (8) located in the rear portion of the body (2) which allows the activation/deactivation of the device (1) and which, advantageously based on its location, prevents being readily turned on or off when an operator is handling the device, which could cause an unwanted interruption of treatment. There can also be seen activation buttons (9, 10) for activating the rotation and agitation mechanisms, whether they are sonic or ultrasonic, located on one side of the body (2) to facilitate the choosing and the duration of the operation of both mechanisms. Control over the treatment on the region to be treated once the device is placed inside the patient is therefore allowed, and several treatments could be performed at the same time depending on the simultaneous operation of both rotation and agitation mechanisms.

According to a preferred mode of operation, the treatment is applied once the angular position of the irrigation cannula (4) with respect to the region to be treated of the patient has been selected and fixed by means of the angular variation mechanism. In this embodiment related to the first option of the present invention, a tab-slot system (11) which is part of the angular variation mechanism and allows the angular variation of the irrigation cannula (4) is observed. In the embodiment shown, said tab-slot system (11) is located on the same side of the body (2) as the activation buttons (9, 10).

In one embodiment, the movable tab of the angular variation mechanism is connected to the nozzle (3) of the coupling system (16), such that the movement of said tab along the slot is transformed into a pushing/pulling action on the nozzle (3) of the coupling system (16). In another embodiment, the movable tab of the angular variation mechanism is connected to an element of the coupling system (16) other than the nozzle (3). In this sense, the connection of the tab to the coupling system (16) can be direct or by means of the intermediation of one or more additional elements. In one embodiment, the tab is connected directly to the main part (163) of the coupling system (16). The tab is accessible for the operator, who can manually act on same.

In one embodiment related to the second option of the present invention, the angular variation mechanism comprises a motor connected to the coupling system (16), directly or by means of the intermediation of one or more additional elements. This embodiment allows the electronic actuation of the angular variation mechanism. In one embodiment, the shaft of the motor is coupled to the coupling system (16).

In this embodiment, the device also comprises inside the body (2) and/or the handle (18) irrigation means comprising one or more conduits fluidically connecting the inside of the container (7) with the irrigation cannula (4). The irrigation means also comprise a pump (75) for conducting the irrigant contained in the container (7) to the irrigation cannula (4) by means of the conduits. In one embodiment, the pump is a gear pump.

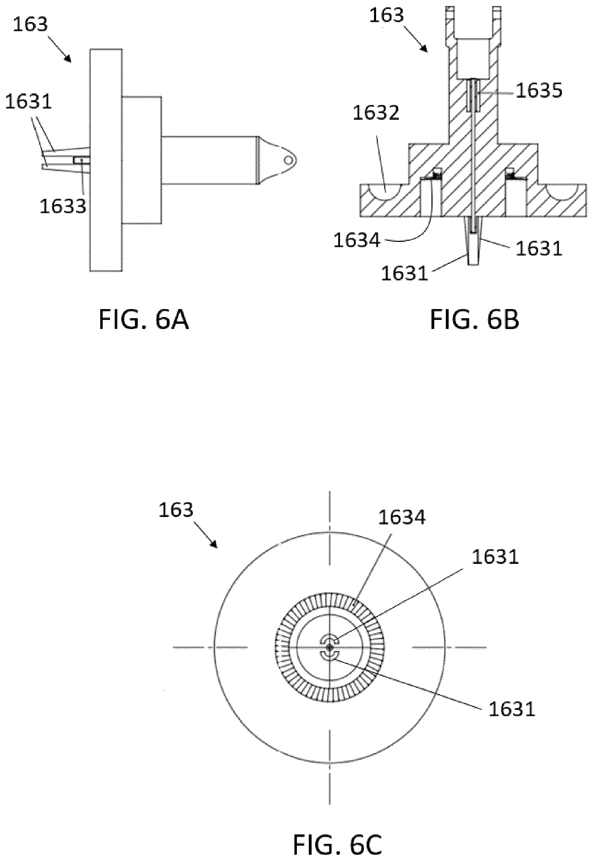

In this embodiment, the handle (18) has coupled thereto a trigger (5) which allows the activation of the gear pump (75) which displaces the irrigant flow towards the irrigation cannula (4) and therefore out of the device (1). Said gear pump can be observed schematically in Figure 6.

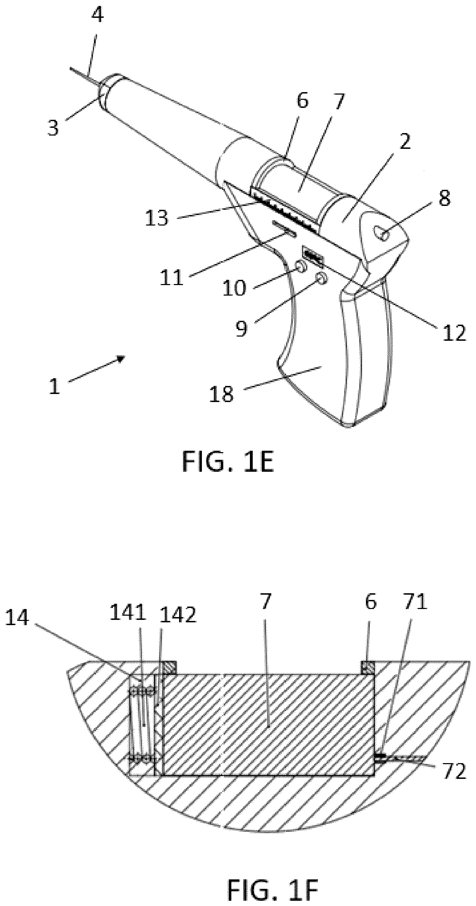

In the embodiment of Figures 1A-1F, the device comprises a temperature sensor configured for determining the temperature of the irrigant contained in the container (7), when the container (7) is housed in the compartment (14). Additionally, Figures 1A and 1E show a display screen (12) on which the temperature of the irrigant contained in the carpule or container (7) housed in the device (1) is indicated during the use thereof.

In this embodiment, the container (7) is secured to the body (2) of the device (1) by the action of a detachable securing part (6), located in turn in the upper portion of the body (2), which will prevent the container (7) from falling or moving from its predetermined position inside the compartment.

Furthermore, in this embodiment, the device comprises a visual measurement system (13) located on the outside of the securing part (6), visible in Figures 1A and 1E. The fill status of the container (7), that is, the amount of irrigant present in the container (7), can be checked by means of the visual measurement system (13).

In one embodiment, the container (7) is coupled to the device in the compartment (14) with a fitting system by means of a spring (141) and piston (142), shown in detail in Figure 1F. The spring (141) and the piston (142) push the container (7) against an inner wall of the compartment (14) and ensure the coupling between a connection tube of the container (7) with a connection nozzle (71) of the irrigation means. Said connection nozzle (71) allows fluidic connection between the inside of the container and the irrigation means of the device (1); more specifically, the connection nozzle (71) connects the inside of the container (7) with a connection conduit (72) of the irrigation means. Figure 1F shows a detailed view, in particular a section view, of a portion of the device (1) to better observe the arrangement of the container (7) inside the body (2). The securing part (6) prevents the container (7) from being displaced from its position inside the compartment (14), whereas the spring-piston mechanism (141, 142) sets the position of the container (7) so as to prevent irrigant from leaking out of the irrigation means.

Located inside the nozzle (3) and/or body (2) of the device (1) are the rest of the elements of the coupling system (16) for coupling the irrigation cannula (4) to the device (1), and the angular variation mechanism of said irrigation cannula (4), where said angular variation mechanism can be actuated by means of the tab-slot mechanism (11) of the device (1).

Figure 1D shows the side view of the device opposite the view of Figure 1A, in which it can be seen that in this embodiment there is no actuation button or lever on said side of the device (1), with all the actuations of the different mechanisms therefore being located on a single side of said device (1). The arrangement of the actuation buttons and/or levers on a single side of the device facilitates handling of the device of the invention with a single hand. Nevertheless, a different arrangement of the actuation buttons and/or levers is possible.

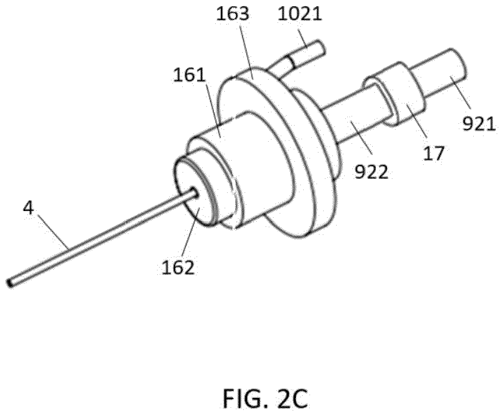

Figures 2B and 2C show, respectively, side and isometric views of the coupling system according to one embodiment of the invention.

In the embodiment of Figures 2B-2C, the coupling system (16) comprises a driven shaft (922), a main part (163), a guide part (161), and an actuation part (162). The main part (163), the guide part (161), and the actuation part (162) are coaxial with one another according to a main direction (x) and are configured for housing and fixing the irrigation cannula (4). The guide part (161) is configured for housing and fixing the actuation part (162) in a predetermined position and for being coupled with the main part (163).

Figures 2B - 2C also show the attachment means (17) present in the device for connecting the driven shaft (922) of the coupling system (16) with the driving shaft (921).

The rotation mechanism of the device comprises first actuation means (not shown) configured for rotating the driving shaft (921) about its longitudinal direction (y). The attachment means (17) between the driving shaft (921) and the driven shaft (922) transmit the rotation of the driving shaft (921) to the driven shaft (922), driving the irrigation cannula (4) to rotate when said irrigation cannula (4) is coupled to the coupling system (16).

In embodiments which are not part of the present invention, in which the device does not include an angular variation mechanism, the attachment means (17) can be implemented as a press-fit attachment, or by means of threaded ends in both shafts which allow a threaded attachment, or by means of additional attachment elements, such as a pin, tabs with respective housings, lugs, or threaded bolts. Likewise, the attachment means can also be implemented as a toothed wheel located at one end of the driving shaft (driving wheel) and a toothed wheel located at the end of the driven shaft (driven wheel), the driving wheel and the driven wheel forming a single part with the driving shaft and the driven shaft, respectively, or forming independent parts coupled to said shafts. In an embodiment of this type, the attachment means are a pinion-crown system.

In embodiments in which the device includes an angular variation mechanism of the invention, the attachment means (17) can be implemented as a universal joint, a Kaplan joint, or other rotation transmission means which simultaneously allow the variation of the angle formed between the main direction (x) of the coupling system (16) and the driving shaft (921) and the rotation of the irrigation cannula (4) around the main direction (x) through the rotation mechanism.

Figures 2B - 2C show a cranked arm (1021) which is part of an agitation mechanism according to one embodiment of the device. The cranked arm (1021) comprises a first end coupled to second actuation means (not shown) and a second end coupled to the main part (163) of the coupling system (16). The second actuation means (102) are configured for rotating the cranked arm (1021) and for producing a rotational movement in the main part (163) established by the driving of the second end of the cranked arm (1021) coupled to the main part (163).

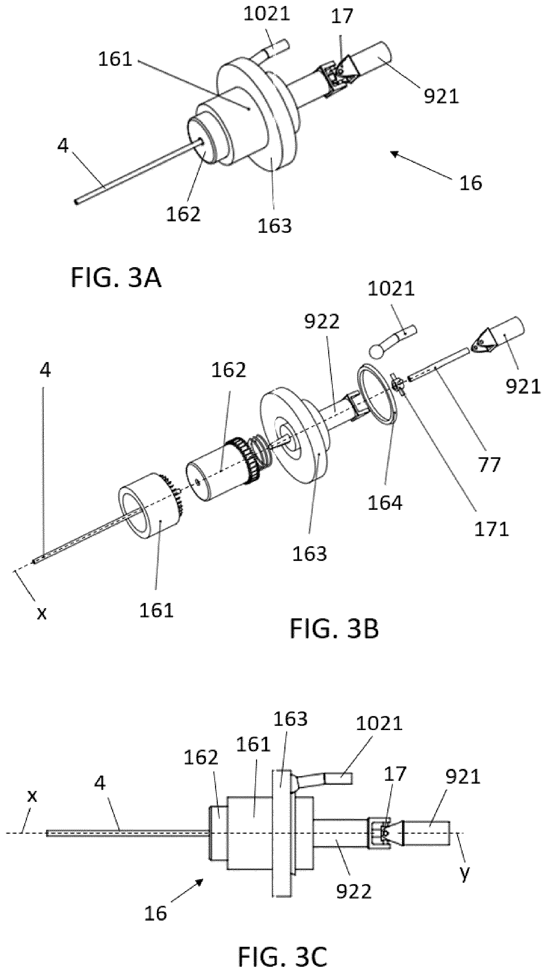

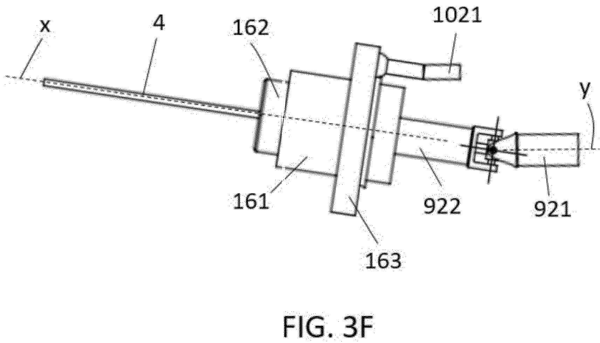

Figures 3A - 3E show, respectively, isometric, exploded isometric, side, exploded side, and section views of the coupling system (16) according to one embodiment of the invention. Figure 3F shows a side view of the coupling system (16) of Figures 3A - 3E when the coupling system has sustained an angular variation with respect to the position shown in Figures 3A - 3E, in particular an angular variation with respect to the driving shaft (921). This figure shows the existence of a non-zero angle between the main direction (x) of the coupling system (16) and the longitudinal direction (y) of the driving shaft (921).

The coupling system (16) of Figures 3A - 3F comprises a driven shaft (922), a main part (163), a guide part (161), and an actuation part (162). The main part (163), the guide part (161), and the actuation part (162) are coaxial with one another according to a main direction (x) and are configured for housing and fixing the irrigation cannula (4). Additionally, the longitudinal direction of the irrigation cannula and the main direction (x) are also coaxial, as can be seen in the figures. The guide part (161) is configured for housing and fixing the actuation part (162) in a predetermined position and for being coupled with the main part (163).

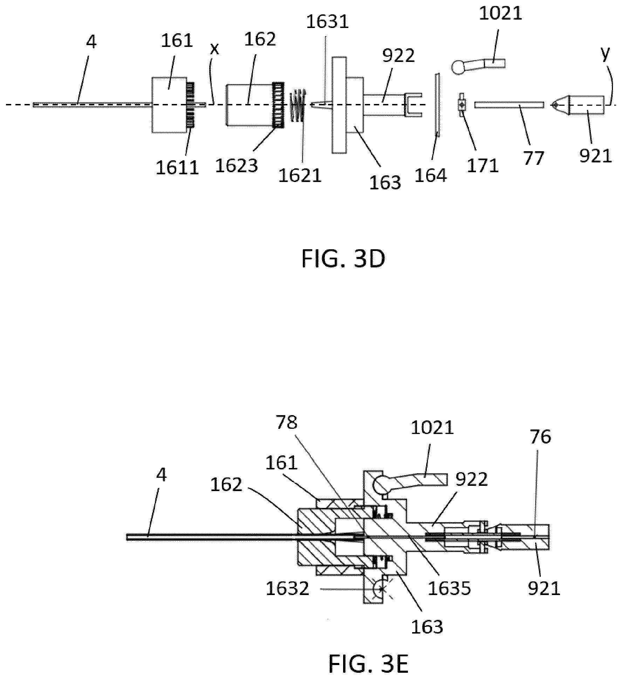

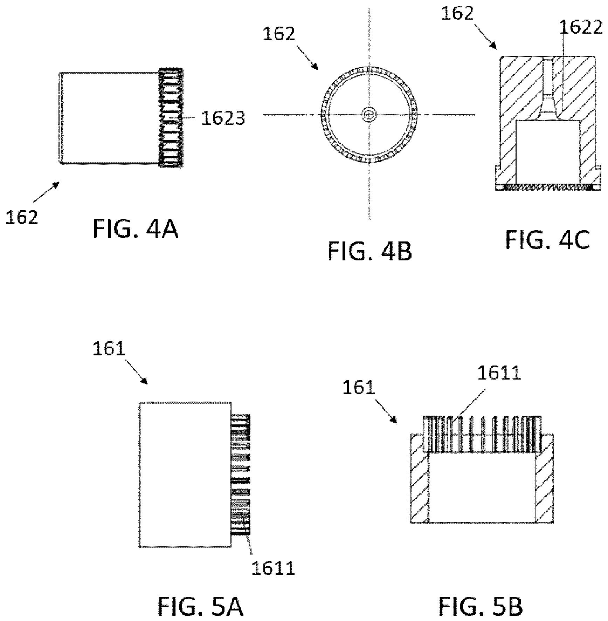

Figures 3A and 3C show two views of the assembled coupling system (16), whereas Figures 3B and 3D show two exploded views of said coupling system (16), in which the parts included therein can be seen. Figures 4A - 4C, 5A - 5B and 6A - 6C show, respectively, different views of the actuation part (162), the guide part (161), and the main part (163) according to the embodiment of Figures 3A - 3F.

In this embodiment, the driven shaft (922) is integrated in a single part with the main part (163). In other embodiments, the driven shaft (922) and the main part (163) are two separate parts configured for being coupled to one another.

In this embodiment, the device comprises a driving shaft (921) configured for rotating around due to the action of first actuation means (not shown). The longitudinal direction (y) about which the driving shaft (921) rotates is schematically indicated in the figures. In one embodiment, the first actuation means (92) are a motor. The driving shaft (921) and the driven shaft (922) are connected by attachment means.

The device of the invention includes an angular variation mechanism configured for modifying the angle formed between the main direction (x) of the coupling system (16) and the driving shaft (921). The attachment means between the driving shaft (921) and the driven shaft (922) are configured for simultaneously allowing the angular variation of the main direction (x) of the coupling system (and, therefore, of the irrigation cannula (4)) with respect to the driving shaft (921), through the angular variation mechanism, and the rotation of the irrigation cannula (4) around the main direction (x) through the rotation mechanism.

In the embodiment shown, the device (1) comprises a cranked arm (1021), which is part of the agitation mechanism. The cranked arm (1021) comprises a first segment and a second segment forming a non-zero angle between same. The first segment has a first end coupled to second actuation means (not shown). The second segment has a substantially spherical second end. The main part (163) of the coupling system (16) comprises a connection element configured for housing the second end of the cranked arm (1021). In this embodiment, the connection element is a slot or rail (1632), along which the second end of the cranked arm (1021) can slide. The second actuation means (in one embodiment, a motor) are configured for rotating the cranked arm (1021) about the longitudinal axis of the first segment and for producing a rotational movement in the main part (163) established by the driving of the second end of the cranked arm (1021) coupled to the main part (163). The movement of the cranked arm (1021) will displace the entire coupling system (16) along one path, defined by the rail or slot itself, which allows an additional movement of the irrigation cannula (4), said movement in this case being a pitching movement which constitutes the agitation of the irrigation cannula (4). The coupling system (16) further comprises in this embodiment a closure element (164) for the circular rail (1632) along which the cranked arm (1021) runs.

In other embodiments, the agitation mechanism can be implemented in a different way. For example, in one embodiment the agitation mechanism comprises second actuation means comprising a vibration motor configured for generating a vibration and for transmitting said vibration to the irrigation cannula, directly or with the intermediation of one or more additional elements. In another embodiment, the agitation mechanism comprises second actuation means and a transmission mechanism, wherein the transmission mechanism is coupled to the second actuation means and is connected to the coupling system for transforming the movement of the second actuation means into an agitation movement of the coupling system.

The irrigant will be transported through the coupling system (16), as can be seen in the embodiment of Figure 3E, through the inside of the coupling system (16), the driven shaft (922), the driving shaft (921), and the attachment means (17). In particular, the irrigation means comprise a first conduit (76) and a second conduit (77) which respectively go through the driving shaft (921) and the attachment means (17), through the inside of which the irrigant runs until reaching an inlet port (1635) into a tubular cavity of the main part (163), through which a conduit (78) allowing fluidic connection with the irrigation cannula (4) runs out of the device (1). The second conduit (77) which goes through the attachment means (17) is preferably an elastic tube and allows the displacement of irrigant while agitation movements are produced, also in case of angular inclination of the main direction of the coupling system (16) with respect to the driving shaft (921).

In a preferred embodiment, the attachment means comprise a torque transmission ring (171) which the second conduit (77) contains while at the same time transmitting the torque of the driving shaft (921). The end of the driving shaft (921) and the end of the driven shaft (922) are connected by means of the torque transmission ring (171), and with it they configure a universal joint. The arrangement of the second conduit (77) inside the torque transmission ring (171) reduces the risk of possible contacts with the outside of the mechanism, which could cause bending in the second conduit (77).

In one embodiment, the driving shaft (921) is toothed at its proximal end, i.e., the end opposite the end connected to the driven shaft (922), for rotating as a result of the action of the first actuation means, preferably a motor, the shaft of which will also have a toothed wheel that allows the meshing thereof with said end of the driving shaft (921).

In the embodiment shown in Figures 3A - 3F, the actuation part (162) comprises a plurality of teeth (1623) arranged on an outer surface of said actuation part (162). The guide part (161) comprises a cavity configured for housing the actuation part (162) and guides (1611) configured for meshing with the teeth (1623) of the actuation part (162). The main part (163) comprises a recess configured for housing an end of the actuation part (162), wherein the recess comprises a toothed wheel (1634). The coupling system (16) further comprises a spring (1621) arranged between the actuation part (162) and the main part (163), configured for exerting resistance against the displacement of the actuation part (162) towards the main part (163).

In this embodiment, by displacing the actuation part (162) towards the recess of the main part (163), the toothed wheel (1634) of the main part (163) causes a rotation of the actuation part (162), which causes:
- the actuation part (162) and the guide part (161) to be fixed by means of the insertion of the teeth (1623) of the actuation part (162) between the guides (1611) of the guide part (161), or
- the actuation part (162) to be released from the guide part (161) by means of the insertion of the teeth (1623) of the actuation part (162) in the guides (1611) of the guide part (161).

In one embodiment, the main part (163) comprises an opening (1633) configured for receiving the irrigation cannula (4), and a plurality of movable second tabs (1631), arranged surrounding the opening (1633), and the actuation part (162) comprises fitting lips (1622) configured for being coupled with the tabs (1631) and for pressing said tabs (1631) in a gripping direction for securing the irrigation cannula (4) housed in the opening (1633) in its suitable position.

According to one embodiment, the coupling of the irrigation cannula (4) to the coupling system (16) comprises the insertion and gripping of the irrigation cannula (4) manually in two steps:
- first inserting and placing the irrigation cannula (4) in the opening (1622) of the main part (163), and
- then pressing the actuation part (162) which, by means of the contact of the tabs (1631) of the main part (163) with the fitting lips (1622) of the actuation part (162), will cause the tabs (1631) of the main part (163) to grip and secure the irrigation cannula (4) to prevent its displacement due to the forces generated by the irrigation.

Advantageously, the tabs (1631) allow the coupling of various types of cannulas (straight or tapered, with a lateral outlet), making this coupling system (16) suitable for a very wide range of cannulas.

The guides (1611) of the guide part (161), arranged in the proximal portion thereof, serve as a guide for the actuation part (162) in addition to serving as a grip for being able to transmit the torque from the guide part (161) to said actuation part (162), which will in turn be fixed to the main part (163). For coupling the actuation part (162) to the main part (163), the actuation part (162) is displaced towards the recess of the main part (163), overcoming resistance from the spring (1621). The toothed wheel (1634) of the main part (163) causes a rotation of the actuation part (162), which causes the actuation part (162) and the guide part (161) to be fixed by means of the insertion of the teeth (1623) of the actuation part (162) between the guides (1611) of the guide part (161). The actuation part (162) is thereby coupled to the guide part (161). When the actuation part (162) is displaced again towards the recess of the main part (163), the toothed wheel (1634) of the main part (163) causes a new rotation of the actuation part (162), which places the teeth (1623) of the actuation part (162) in the guides (1611) of the guide part (161) and allows the actuation part (162) to be released with respect to the guide part (161).

Moreover, the actuation part (162) and the main part (161) are fixed to one another by means of the coupling of the fitting lips (1622) of the actuation part (162) and the tabs (1631) of the main part (161).

In other embodiments, the coupling system (16) can be implemented differently from how it is described in the embodiment shown in Figures 2B - 6, for example using a larger or smaller number of parts and/or with a different configuration for the coupling between parts and/or for the securing of the irrigation cannula.

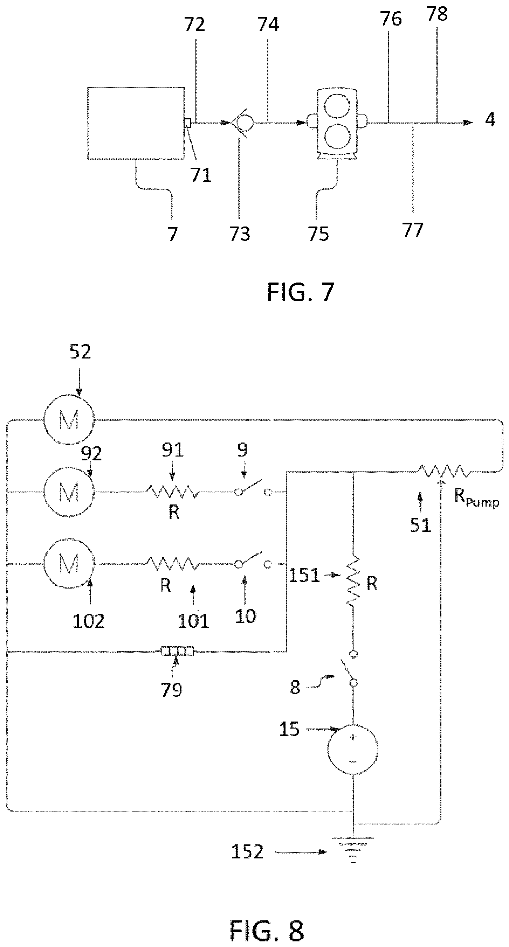

Figure 7 shows a diagram of conduits and instruments of the irrigation means according to one embodiment of the invention.

In this embodiment, the irrigation means comprise a connection conduit (72) for the connection with the container (7), a check valve (73), an irrigation pump (75), and one or more conduits (74, 76, 77, 78). In one embodiment, the irrigation means comprise a connection nozzle (71) which configures the connection interface between the outlet of the container (7) and the connection conduit (72).

In this embodiment, after coupling the container (7) to the irrigation pump (75) by means of the connection nozzle (71) and the connection conduit (72), as shown in Figure 6, the irrigant reaches the check valve (73), which will prevent the irrigant from being able to return to the container (7) should pumping stop. Once the irrigant flow goes through the check valve (73), it is led through a conduit (74) that reaches the pump (75), for example a gear pump. The pump (75) provides a speed to the irrigant that can be regulated and it causes the irrigant to advance through a new conduit (76), which longitudinally goes through the driving shaft (921), to a flexible tube (77) which goes through the attachment means and is coupled to the coupling mechanism (16) by means of a port (1635) of the main part (163). The main part includes a tubular channel in which there is arranged a conduit (78) configured for being fluidically connected with the irrigation cannula (4) when it is assembled in the coupling system (16).

Despite the fact that different conduits have been described in this embodiment, in other embodiments several conduits can be implemented as continuous segments of a single conduit or fluidic continuity can be provided by connecting conduits with tubular channels present in elements of the device.

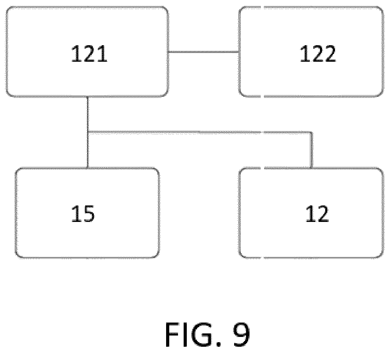

Figures 8 and 9 show the electronic and electrical components of the device as well as their connections, according to one embodiment of the invention, as a result of which the proper operation of the pumping, rotation, irrigant heating, and agitation systems is assured. Energy can be supplied to the device (1) by means of a battery (15), where the battery (15) can be recharged or changed. The device (1) will be turned on or off as a result of the action of a button (8) which works like a switch. The battery will be connected to a ground connection (152) and to a protection resistor (151) of the system, which will generate a current intensity that does not damage the electronic components. The electric motors (52, 92, 102) which will allow the pumping of the irrigant, as well as the rotation and the agitation of the irrigation cannula in one embodiment of the invention, will be regulated by means of systems of switches (5, 9, 10) and fixed or variable resistors (51, 91, 101).

Figure 8 schematically shows the heating means, in particular a resistor (79) for heating the irrigant. By passing current through the resistor (79), the container (7) and the contents thereof are heated to a temperature suitable for irrigation.

Figure 9 shows a block diagram of the temperature display and measuring system according to one embodiment of the invention. In one embodiment, the device includes temperature control means for controlling the temperature of the irrigant contained in the container, when the container is housed in the compartment of the device. In the embodiment of Figure 9, the electronic system of the temperature control means comprises a temperature sensor (122) connected to a microcontroller (121) powered by the battery (15). The microcontroller (121) will send the data obtained from the temperature sensor (122) to a display screen (12) located on the outside of the body (2) of the device, which will allow the temperature of the contents in the container (7) to be known. Additionally, the microcontroller (121) can be configured for controlling the agitation frequency and/or the flow rate of the irrigant.

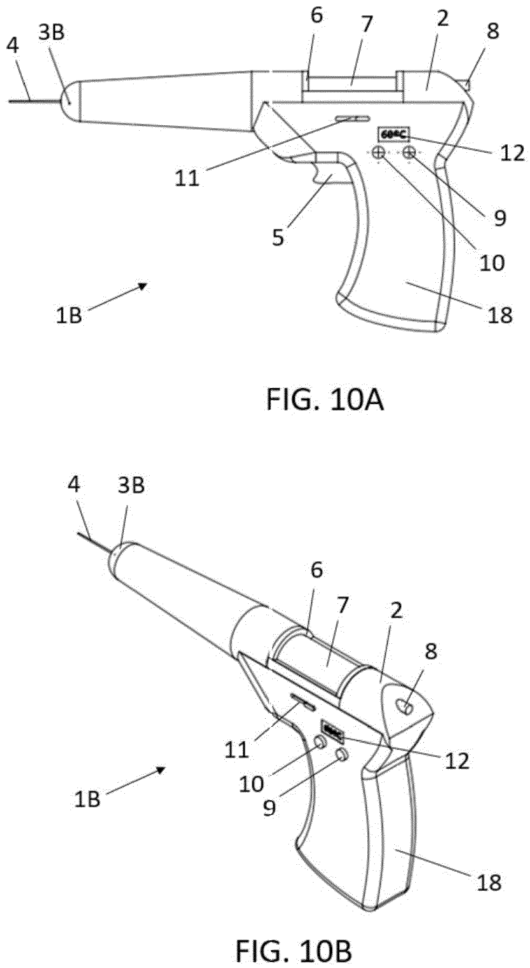

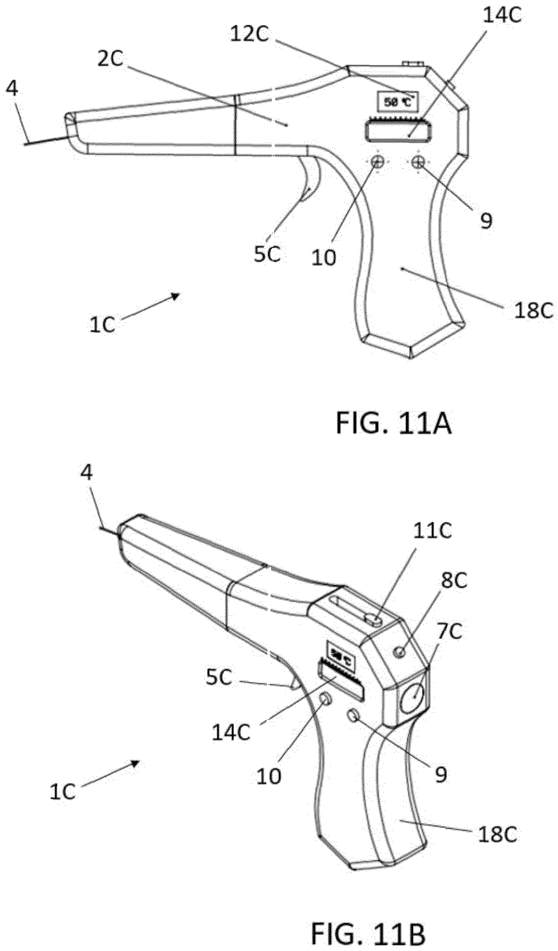

Figures 10A - 10B and 11A - 11B show two embodiments of the invention, in which some elements differ from the embodiment of Figures 1A - 1F. Figures 10A - 10B show an alternative spherical nozzle (3B), which allows an orientation in more directions should this be necessary for complicated dental anatomies. In this embodiment, the container (7) is arranged in a compartment (14) located in the rear portion of the body (2B) and is inserted manually without a detachable part.

In the embodiment of Figures 11A - 11B, the device (1C) includes a window (7C) in the back for viewing the fill status of the container and does not include a nozzle. Other elements shown in Figures 10A - 10B and 11A - 11B represent only differences in shape or in placement of some elements, such as the handle (1C), the trigger (5C), the slot and tab system (11C) for angular variation of the cannula, the temperature display screen (12C), and the on/off button (8C).

## Claims

1. A positive pressure irrigation endodontic device (1) comprising:
- a body (2) comprising a compartment (14) configured for detachably housing a container (7), wherein the container (7) contains an irrigant,
- irrigation means housed in the body (2) and configured for establishing fluid communication with the container (7) when the container (7) is housed in the compartment (14), wherein the irrigation means are configured for conducting the irrigant from the container (7) to the outside of the device,
- a coupling system (16) configured for coupling an irrigation cannula (4) to the device (1), establishing fluid communication between the irrigation cannula (4) and the irrigation means,
wherein the coupling system (16) comprises:
- a driven shaft (922) extending along a main direction (x),
- a main part (163) coaxial with the driven shaft (922) according to the main direction (x) and coupled to said driven shaft (922),
wherein the main part (163) is configured for housing and fixing the irrigation cannula (4),
the device (1) further comprising:
- a rotation mechanism comprising a driving shaft (921) and first actuation means (92) configured for completely rotating the driving shaft (921) around its longitudinal direction (y),
- attachment means (17) between the driving shaft (921) and the driven shaft (922) configured for connecting the driving shaft (921) and the driven shaft (922) such that the rotation of the driving shaft (921) is transmitted to the driven shaft (922), driving the irrigation cannula (4) to rotate when said irrigation cannula (4) is coupled to the coupling system (16),
the device (1) being **characterized in that** it comprises
- an angular variation mechanism configured for modifying the angle formed between the main direction (x) of the coupling system (16) and the driving shaft (921), wherein the angular variation mechanism is implemented according to one of the following options:
(i) the angular variation mechanism comprises a movable tab connected directly or by means of at least one intermediate element to the coupling system (16), such that the movement of the tab is transformed into a pushing or pulling action on the coupling system (16) so that by means of the pushing or pulling action exerted, the mechanism causes an angular movement of the coupling system with respect to the driving shaft;
(ii) the angular variation mechanism comprises a motor connected directly or by means of the intermediation of one or more additional elements to the coupling system (16) and wherein the motor is configured for moving the coupling system (16).

2. The device (1) according to the preceding claim, comprising an agitation mechanism configured for causing an agitation movement on the irrigation cannula (4).

3. The device (1) according to the preceding claim, wherein the agitation mechanism is implemented according to one of the following options:
(i) the agitation mechanism comprises second actuation means comprising a vibration motor configured for generating a vibration and for transmitting said vibration to the irrigation cannula;
(ii) the agitation mechanism comprises second actuation means and a transmission mechanism, wherein the transmission mechanism is coupled to the second actuation means and is connected to the coupling system for transforming the movement of the second actuation means into an agitation movement of the coupling system; wherein the second actuation means preferably comprise a rotary or reciprocating motor; or
(iii) the agitation mechanism comprises second actuation means and a movable element coupled to said second actuation means, and the main part (163) of the coupling system (16) comprises a connection element (1632), the movable element being configured for being displaced along said connection element (1632) due to the effect of the second actuation means, causing a driving movement of the main part (163); wherein the second actuation means preferably comprise a rotary or reciprocating motor.

4. The device (1) according to the preceding claim, wherein the agitation mechanism is implemented according to option (iii), wherein the movable element is a cranked arm (1021) with a first end coupled to the second actuation means (102) and a second end configured for being housed in the connection element (1632).

5. The device (1) according to any of the preceding claims, wherein the attachment means (17) between the driving shaft (921) and the driven shaft (922) are configured for simultaneously allowing the variation of the angle formed between the main direction (x) of the coupling system (16) and the driving shaft (921) and the rotation of the irrigation cannula (4) around the main direction (x) through the rotation mechanism.

6. The device (1) according to claim 5, wherein the attachment means are implemented as a universal joint or rotation transmission means.

7. The device (1) according to any of the preceding claims, wherein the angular variation mechanism comprises at least one lever and/or at least one toothed wheel connecting the movable tab or the motor to the coupling system (16).

8. The device (1) according to any of the preceding claims, wherein the coupling system (16) further comprises:
- a guide part (161), and
- an actuation part (162),
wherein the guide part (161) and the actuation part (162) are coaxial with one another, and also with the main part (163) according to the main direction (x), and wherein the guide part (161) is configured for housing and fixing the actuation part (162) and for being coupled with the main part (163).

9. The device (1) according to claim 8,
wherein the main part (163) comprises an opening (1633) configured for receiving the irrigation cannula (4), and a plurality of movable second tabs (1631), arranged surrounding the opening (1633), and
wherein the actuation part (162) comprises fitting lips (1622) configured for being coupled with the second tabs (1631) and for pressing said second tabs (1631) in a gripping direction for securing the irrigation cannula (4) housed in the opening (1633).

10. The device (1) according to any of claims 8 or 9, wherein:
the actuation part (162) comprises a plurality of teeth (1623) arranged on an outer surface,
the guide part (161) comprises a cavity configured for housing the actuation part (162) and guides (1611) configured for meshing with the teeth (1623) of the actuation part (162),
the main part (163) comprises a recess configured for housing an end of the actuation part (162), wherein the recess comprises a toothed wheel (1634),
the coupling system (16) comprises a spring arranged between the actuation part (162) and the main part (163), configured for exerting resistance against the displacement of the actuation part (162) towards the main part (163),
wherein the displacement of the actuation part (162) towards the recess of the main part (163) causes a rotation of the actuation part (162) by means of the toothed wheel (1634) of the main part (163), which causes:
- the actuation part (162) and the guide part (161) to be fixed by means of the teeth (1623) of the actuation part (162), or
- the actuation part (162) to be released from the guide part (161) by means of the teeth (1623) of the actuation part (162).

11. The device (1) according to any of the preceding claims, wherein the first actuation means (92) comprise a motor.

12. The device (1) according to any of the preceding claims, wherein the compartment (14) comprises a spring (141) connected to a piston (142), wherein the spring (141) is configured for pushing the piston (142) towards an inner wall of the compartment (14).

13. The device (1) according to any of the preceding claims, comprising heating means (79) configured for heating the irrigant contained in the container (7) when it is housed in the compartment (14).

14. The device (1) according to any of the preceding claims, wherein the irrigation means comprise a pump for regulating the irrigant flow speed.

15. An irrigation system comprising an endodontic device (1) according to any of the preceding claims, and an irrigation cannula (4) coupled to the coupling system (16), wherein the irrigation cannula (4) comprises an irrigant outlet port arranged on one side.

## Patentansprüche

1. Endodontische Überdruck-Spülvorrichtung (1), die Folgendes umfasst:
- einen Körper (2) mit einer Kammer (14), die dazu ausgebildet ist, einen Behälter (7) lösbar aufzunehmen, wobei der Behälter (7) eine Spüllösung enthält,
- Spülmittel, die in dem Körper (2) aufgenommen sind und dazu ausgebildet sind, eine Fluidverbindung mit dem Behälter (7) herzustellen, wenn der Behälter (7) in der Kammer (14) aufgenommen ist, wobei die Spülmittel dazu ausgebildet sind, die Spüllösung von dem Behälter (7) zur Außenseite der Vorrichtung zu leiten,
- ein Kopplungssystem (16), das dazu ausgebildet ist, eine Spülkanüle (4) mit der Vorrichtung (1) zu verbinden, wodurch eine Fluidverbindung zwischen der Spülkanüle (4) und den Spülmitteln hergestellt wird,
wobei das Kopplungssystem (16) Folgendes umfasst:
- eine Abtriebswelle (922), die sich entlang einer Hauptrichtung (x) erstreckt,
- ein Hauptteil (163), das mit der Abtriebswelle (922) gemäß der Hauptrichtung (x) koaxial ist und mit der Abtriebswelle (922) verbunden ist,
wobei das Hauptteil (163) dazu ausgebildet ist, die Spülkanüle (4) aufzunehmen und zu befestigen,
wobei die Vorrichtung (1) ferner Folgendes umfasst:
- einen Drehmechanismus mit einer Antriebswelle (921) und ersten Betätigungsmitteln (92), die dazu ausgebildet sind, die Antriebswelle (921) vollständig um ihre Längsrichtung (y) zu drehen,
- Befestigungsmittel (17) zwischen der Antriebswelle (921) und der Abtriebswelle (922), die dazu ausgebildet sind, die Antriebswelle (921) und die Abtriebswelle (922) so zu verbinden, das die Drehung der Antriebswelle (921) auf die Abtriebswelle (922) übertragen wird, wobei die Spülkanüle (4) in Drehung versetzt wird, wenn die Spülkanüle (4) mit dem Kopplungssystem (16) verbunden ist,
wobei die Vorrichtung (1) **dadurch gekennzeichnet ist, dass** sie Folgendes umfasst:
- einen Winkelveränderungsmechanismus, der dazu ausgebildet ist, den zwischen der Hauptrichtung (x) des Kopplungssystems (16) und der Antriebswelle (921) gebildeten Winkel zu modifizieren, wobei der Winkelveränderungsmechanismus gemäß einer der folgenden Optionen ausgeführt ist:
(i) der Winkelveränderungsmechanismus umfasst eine bewegliche Lasche, die direkt oder mit Hilfe mindestens eines Zwischenelements mit dem Kopplungssystem (16) verbunden ist, sodass die Bewegung der Lasche in eine Schiebe- oder Ziehwirkung auf das Kopplungssystem (16) umgewandelt wird, sodass mit Hilfe der ausgeübten Schiebe- oder Ziehwirkung der Mechanismus eine Winkelbewegung des Kopplungssystems in Bezug auf die Antriebswelle verursacht;
(ii) der Winkelveränderungsmechanismus umfasst einen Motor, der direkt oder mit Hilfe der Vermittlung eines oder mehrerer zusätzlicher Elemente mit dem Kopplungssystem (16) verbunden ist, und wobei der Motor dazu ausgebildet ist, das Kopplungssystem (16) zu bewegen.

2. Vorrichtung (1) nach dem vorhergehenden Anspruch, mit einem Schüttelmechanismus, der dazu ausgebildet ist, eine Schüttelbewegung an der Spülkanüle (4) zu bewirken.

3. Vorrichtung (1) nach dem vorhergehenden Anspruch, wobei der Schüttelmechanismus gemäß einer der folgenden Optionen ausgeführt ist:
(i) der Schüttelmechanismus umfasst zweite Betätigungsmittel mit einem Vibrationsmotor, der dazu ausgebildet ist, eine Schwingung zu erzeugen und die Schwingung auf die Spülkanüle zu übertragen;
(ii) der Schüttelmechanismus umfasst zweite Betätigungsmittel und einen Übertragungsmechanismus, wobei der Übertragungsmechanismus mit den zweiten Betätigungsmitteln verbunden ist und mit dem Kopplungssystem verbunden ist, um die Bewegung der zweiten Betätigungsmittel in eine Schüttelbewegung des Kopplungssystems umzuwandeln; wobei die zweiten Betätigungsmittel vorzugsweise einen Dreh- oder Hubkolbenmotor umfassen; oder
(iii) der Schüttelmechanismus umfasst zweite Betätigungsmittel und ein bewegliches Element, das mit den zweiten Betätigungsmitteln verbunden ist, und das Hauptteil (163) des Kopplungssystems (16) umfasst ein Verbindungselement (1632), wobei das bewegliche Element dazu ausgebildet ist, durch die Wirkung der zweiten Betätigungsmittel entlang des Verbindungselements (1632) verschoben zu werden, was eine Antriebsbewegung des Hauptteils (163) verursacht; wobei die zweiten Betätigungsmittel vorzugsweise einen Dreh- oder Hubkolbenmotor umfassen.

4. Vorrichtung (1) nach dem vorhergehenden Anspruch, wobei der Schüttelmechanismus gemäß Option (iii) ausgeführt ist, wobei das bewegliche Element ein gekröpfter Arm (1021) ist mit einem ersten Ende, das mit dem zweiten Betätigungsmittel (102) verbunden ist, und einem zweiten Ende, das dazu ausgebildet ist, in dem Verbindungselement (1632) aufgenommen zu werden.

5. Vorrichtung (1) nach einem der vorhergehenden Ansprüche, wobei die Befestigungsmittel (17) zwischen der Antriebswelle (921) und der Abtriebswelle (922) dazu ausgebildet sind, die Veränderung des zwischen der Hauptrichtung (x) des Kopplungssystems (16) und der Antriebswelle (921) gebildeten Winkels und die Drehung der Spülkanüle (4) um die Hauptrichtung (x) durch den Drehmechanismus gleichzeitig zu erlauben.

6. Vorrichtung (1) nach Anspruch 5, wobei die Befestigungsmittel als Universalgelenk oder Drehungsübertragungsmittel ausgeführt sind.

7. Vorrichtung (1) nach einem der vorhergehenden Ansprüche, wobei der Winkelveränderungsmechanismus mindestens einen Hebel und/oder mindestens ein Zahnrad umfasst, die die bewegliche Lasche oder den Motor mit dem Kopplungssystem (16) verbinden.

8. Vorrichtung (1) nach einem der vorhergehenden Ansprüche, wobei das Kopplungssystem (16) ferner Folgendes umfasst:
- ein Führungsteil (161), und
- ein Betätigungsteil (162),
wobei das Führungsteil (161) und das Betätigungsteil (162) miteinander koaxial sind, und auch mit dem Hauptteil (163) gemäß der Hauptrichtung (x), und wobei das Führungsteil (161) dazu ausgebildet ist, das Betätigungsteil (162) aufzunehmen und zu befestigen und mit dem Hauptteil (163) verbunden zu werden.

9. Vorrichtung (1) nach Anspruch 8,
wobei das Hauptteil (163) eine Öffnung (1633) umfasst, die dazu ausgebildet ist, die Spülkanüle (4) und eine Vielzahl von beweglichen zweiten Laschen (1631) aufzunehmen, die um die Öffnung (1633) herum angeordnet sind, und
wobei das Betätigungsteil (162) Einpasslippen (1622) umfasst, die dazu ausgebildet sind, mit den zweiten Laschen (1631) verbunden zu werden und die zweiten Laschen (1631) in eine Greifrichtung zu drücken, um die in der Öffnung (1633) aufgenommene Spülkanüle (4) zu sichern.

10. Vorrichtung (1) nach einem der Ansprüche 8 oder 9, wobei:
das Betätigungsteil (162) eine Vielzahl von Zähnen (1623) umfasst, die auf einer Außenseite angeordnet sind,
das Führungsteil (161) einen Hohlraum umfasst, der dazu ausgebildet ist, das Betätigungsteil (162) und Führungen (1611) aufzunehmen, die dazu ausgebildet sind, in die Zähne (1623) des Betätigungsteils (162) einzugreifen,
das Hauptteil (163) eine Ausnehmung umfasst, die dazu ausgebildet ist, ein Ende des Betätigungsteils (162) aufzunehmen, wobei die Ausnehmung ein Zahnrad (1634) umfasst,
das Kopplungssystem (16) eine Feder umfasst, die zwischen dem Betätigungsteil (162) und dem Hauptteil (163) angeordnet ist und dazu ausgebildet ist, einen Widerstand gegen die Verschiebung des Betätigungsteils (162) in Richtung des Hauptteils (163) auszuüben,
wobei die Verschiebung des Betätigungsteils (162) in Richtung der Ausnehmung des Hauptteils (163) eine Drehung des Betätigungsteils (162) mit Hilfe des Zahnrads (1634) des Hauptteils (163) verursacht, was dazu führt, dass:
- das Betätigungsteil (162) und das Führungsteil (161) mit Hilfe der Zähne (1623) des Betätigungsteils (162) befestigt werden, oder
- das Betätigungsteil (162) mit Hilfe der Zähne (1623) des Betätigungsteils (162) von dem Führungsteil (161) gelöst wird.

11. Vorrichtung (1) nach einem der vorhergehenden Ansprüche, wobei die ersten Betätigungsmittel (92) einen Motor umfassen.

12. Vorrichtung (1) nach einem der vorhergehenden Ansprüche, wobei die Kammer (14) eine mit einem Kolben (142) verbundene Feder (141) umfasst, wobei die Feder (141) dazu ausgebildet ist, den Kolben (142) in Richtung einer Innenwand der Kammer (14) zu schieben.

13. Vorrichtung (1) nach einem der vorhergehenden Ansprüche, mit Heizmitteln (79), die dazu ausgebildet sind, die in dem Behälter (7) enthaltene Spüllösung zu erwärmen, wenn sie in der Kammer (14) aufgenommen ist.

14. Vorrichtung (1) nach einem der vorhergehenden Ansprüche, wobei die Spülmittel eine Pumpe zum Regulieren der Strömungsgeschwindigkeit der Spüllösung umfassen.

15. Spülsystem mit einer endodontischen Vorrichtung (1) nach einem der vorhergehenden Ansprüche und einer mit dem Kopplungssystem (16) verbundenen Spülkanüle (4), wobei die Spülkanüle (4) eine auf einer Seite angeordnete Auslassöffnung für die Spüllösung umfasst.

## Revendications

1. Dispositif endodontique d'irrigation à pression positive (1) comprenant :
- un corps (2) comprenant un compartiment (14) configuré pour loger de manière amovible un récipient (7), dans lequel le récipient (7) contient un irrigant,
- des moyens d'irrigation logés dans le corps (2) et configurés pour établir une communication fluidique avec le récipient (7) lorsque le récipient (7) est logé dans le compartiment (14), les moyens d'irrigation étant configurés pour conduire l'irrigant du récipient (7) vers l'extérieur du dispositif,
- un système de couplage (16) configuré pour coupler une canule d'irrigation (4) au dispositif (1), établissant une communication fluidique entre la canule d'irrigation (4) et les moyens d'irrigation,
dans lequel le système de couplage (16) comprend :
- un arbre entraîné (922) s'étendant le long d'une direction principale (x),
- une partie principale (163) coaxiale avec l'arbre entraîné (922) selon la direction principale (x) et couplée dudit arbre entraîné (922),
dans lequel la partie principale (163) est configurée pour loger et fixer la canule d'irrigation (4),
le dispositif (1) comprenant en outre :
- un mécanisme de rotation comprenant un arbre d'entraînement (921) et un premier moyen d'actionnement (92) configuré pour faire tourner complètement l'arbre d'entraînement (921) autour de sa direction longitudinale (y),
- des moyens de fixation (17) entre l'arbre d'entraînement (921) et l'arbre entraîné (922) configurés pour relier l'arbre d'entraînement (921) et l'arbre entraîné (922) de telle sorte que la rotation de l'arbre d'entraînement (921) est transmise à l'arbre entraîné (922), entraînant la rotation de la canule d'irrigation (4) lorsque ladite canule d'irrigation (4) est accouplée au système de couplage (16),
le dispositif (1) étant **caractérisé en ce qu'**il comprend :
- un mécanisme de variation angulaire configuré pour modifier l'angle formé entre la direction principale (x) du système de couplage (16) et l'arbre d'entraînement (921), dans lequel le mécanisme de variation angulaire est mis en œuvre selon l'une des options suivantes :
(i) le mécanisme de variation angulaire comprend une languette mobile reliée directement ou au moyen d'au moins un élément intermédiaire au système de couplage (16), de sorte que le mouvement de la languette se transforme en une poussée ou une traction action sur le système de couplage (16) de sorte que, par l'action de poussée ou de traction exercée, le mécanisme provoque un mouvement angulaire du système de couplage par rapport à l'arbre d'entraînement ;
(ii) le mécanisme de variation angulaire comprend un moteur connecté directement ou par l'intermédiaire d'un ou plusieurs éléments additionnels au système de couplage (16) et dans lequel le moteur est configuré pour déplacer le système de couplage (16).

2. Le dispositif (1) selon la revendication précédente, comprenant un mécanisme d'agitation configuré pour provoquer un mouvement d'agitation sur la canule d'irrigation (4).

3. Le dispositif (1) selon la revendication précédente, dans lequel le mécanisme d'agitation est mis en œuvre selon l'une des options suivantes :
(i) le mécanisme d'agitation comprend de deuxièmes moyens d'actionnement comprenant un moteur vibrant configuré pour générer une vibration et pour transmettre cette vibration à la canule d'irrigation ;
(ii) le mécanisme d'agitation comprend de deuxièmes moyens d'actionnement et un mécanisme de transmission, dans lequel le mécanisme de transmission est couplé aux deuxièmes moyens d'actionnement et est relié au système de couplage pour transformer le mouvement des deuxièmes moyens d'actionnement en un mouvement d'agitation du système de couplage, dans lequel les deuxièmes moyens d'actionnement comprennent de préférence un moteur rotatif ou alternatif ; ou
(iii) le mécanisme d'agitation comprend deuxièmes moyens d'actionnement et un élément mobile couplé auxdits deuxièmes moyens d'actionnement, et la partie principale (163) du système de couplage (16) comprend un élément de connexion (1632), l'élément mobile étant configuré pour être déplacé le long dudit élément de connexion (1632) sous l'effet des deuxièmes moyens d'actionnement, provoquant un mouvement d'entraînement de la partie principale (163) ; dans lequel les deuxièmes moyens d'actionnement comprennent de préférence un moteur rotatif ou alternatif.

4. Le dispositif (1) selon la revendication précédente, dans lequel le mécanisme d'agitation est mis en œuvre selon l'option (iii), dans lequel l'élément mobile est un bras coudé (1021) avec une première extrémité couplée aux deuxièmes moyens d'actionnement (102) et une deuxième extrémité configurée pour être logée dans l'élément de connexion (1632).

5. Le dispositif (1) selon l'une quelconque des revendications précédentes, dans lequel les moyens de fixation (17) entre l'arbre d'entraînement (921) et l'arbre entraîné (922) sont configurés pour permettre simultanément la variation de l'angle formé entre la direction principale (x) du système de couplage (16) et l'arbre d'entraînement (921) et la rotation de la canule d'irrigation (4) autour de la direction principale (x) par l'intermédiaire du mécanisme de rotation.

6. Le dispositif (1) selon la revendication 5, dans lequel les moyens de fixation sont mis en œuvre sous forme d'un joint universel ou de moyens de transmission de la rotation.

7. Le dispositif (1) selon l'une quelconque des revendications précédentes, dans lequel la variation angulaire comprend au moins un levier et/ou au moins une roue dentée reliant la languette mobile ou le moteur au système de couplage (16).

8. Le dispositif (1) selon l'une des revendications précédentes, dans lequel le système de couplage (16) comprend en outre :
- une partie de guidage (161), et
- une partie d'actionnement (162),
dans lequel la partie de guidage (161) et la partie d'actionnement (162) sont coaxiales l'une avec l'autre, ainsi qu'avec la partie principale (163) selon la direction principale (x), et dans lequel la partie de guidage (161) est configurée pour loger et fixer la partie d'actionnement (162) et pour être couplé à la partie principale (163).

9. Le dispositif (1) selon la revendication 8,
dans lequel la partie principale (163) comprend une ouverture (1633) configurée pour recevoir la canule d'irrigation (4), et une pluralité de deuxièmes languettes mobiles (1631), disposées entourant l'ouverture (1633), et
dans lequel la partie d'actionnement (162) comprend des lèvres d'ajustement (1622) configurées pour être couplées avec les deuxièmes languettes (1631) et pour presser lesdites deuxièmes languettes (1631) dans une direction de préhension afin de fixer la canule d'irrigation (4) logée dans l'ouverture (1633).

10. Le dispositif (1) selon l'une quelconque des revendications 8 ou 9, dans lequel :
la partie d'actionnement (162) comprend une pluralité de dents (1623) disposées sur une surface extérieure,
la partie de guidage (161) comprend une cavité configurée pour loger la partie d'actionnement (162) et des guides (1611) configurés pour s'engrener avec les dents (1623) de la partie d'actionnement (162),
la partie principale (163) comprend un renfoncement configuré pour loger une extrémité de la partie d'actionnement (162), dans laquelle le renfoncement comprend une roue dentée (1634),
le système de couplage (16) comprend un ressort disposé entre la partie d'actionnement (162) et la partie principale (163), configuré pour exercer une résistance contre le déplacement de la partie d'actionnement (162) vers la partie principale (163),
dans lequel le déplacement de la partie d'actionnement (162) vers le renfoncement de la partie principale (163) entraîne une rotation de la partie d'actionnement (162) au moyen de la roue dentée (1634) de la partie principale (163), ce qui provoque :
- la fixation de la partie d'actionnement (162) et de la partie de guidage (161) par l'intermédiaire des dents (1623) de la partie d'actionnement (162), ou
- la libération de la partie d'actionnement (162) de la partie de guidage (161) au moyen des dents (1623) de la partie d'actionnement (162).

11. Le dispositif (1) selon l'une quelconque des revendications précédentes, dans lequel les premiers moyens d'actionnement (92) comprennent un moteur.

12. Le dispositif (1) selon l'une quelconque des revendications précédentes, dans lequel le compartiment (14) comprend un ressort (141) relié à un piston (142), dans lequel le ressort (141) est configuré pour pousser le piston (142) vers une paroi intérieure du compartiment (14).

13. Le dispositif (1) selon l'une quelconque des revendications précédentes, comprenant des moyens de chauffage (79) configurés pour chauffer l'irrigant contenu dans le récipient (7) lorsqu'il est logé dans le compartiment (14).

14. Le dispositif (1) selon l'une quelconque des revendications précédentes, dans lequel les moyens d'irrigation comprennent une pompe pour réguler la vitesse d'écoulement de l'irrigant.

15. Système d'irrigation comprenant un dispositif endodontique (1) selon l'une quelconque des revendications précédentes, et une canule d'irrigation (4) couplée au système de couplage (16), dans laquelle la canule d'irrigation (4) comprend un orifice de sortie de l'irrigant disposé sur un côté.
